# EUROPEAN PATENT APPLICATION

(11) **EP 0 619 578 A1**
(43) Date of publication of application: **12.10.1994**
(21) Application number: 94103942.2
(22) Date of filing: 14.03.1994
(51) Int. Cl.: G11B 15/61, G11B 15/665

(54) **Magnetic recording and reproducing apparatus**

(30) Priority: 06.04.1993 JP 79237/93
(71) Applicant: MATSUSHITA ELECTRIC INDUSTRIAL CO., LTD., Kadoma-shi, Osaka-fu, 571 (JP)
(72) Inventor: Honsho, Hironori, Neyagawa City 572 (JP); Okamoto, Satoshi, Amagasaki City 660 (JP)
(74) Representative: Dr. Elisabeth Jung Dr. Jürgen Schirdewahn Dipl.-Ing. Claus Gernhardt

(57) **Abstract**

In a magnetic tape moving mechanism of a magnetic recording and reproducing apparatus, a drum chassis (6) provided with a rotating drum (2) and plural guide rollers (7, 9, 11, 12, 19) for winding a magnetic tape (4) of a cassette (3) around the rotating drum (2) is pivotally mounted on a cassette chassis (5) for holding the cassette (3), so that the drum chassis (6) rotates by about 90 degrees with respect to the cassette chassis (5). When the cassette (3) is loaded in the magnetic tape moving mechanism, the axis of the rotating drum (2) is substantially parallel to the axis of a tape reel (3A; 3B) of the cassette (3); and after the magnetic tape (4) is wound around the rotating drum (2), the drum chassis (6) is rotated by about 90 degrees, and the axis of the rotating drum (2) is tilted substantially perpendicularly with respect to the axis of the tape reel (3A; 3B).

## Description

### FIELD OF THE INVENTION AND RELATED ART STATEMENT

### 1. FIELD OF THE INVENTION

The present invention relates to a helical-scanning magnetic recording and reproducing apparatus for recording and reproducing by a rotary head on a magnetic tape wound around a drum.

### 2. DESCRIPTION OF THE RELATED ART

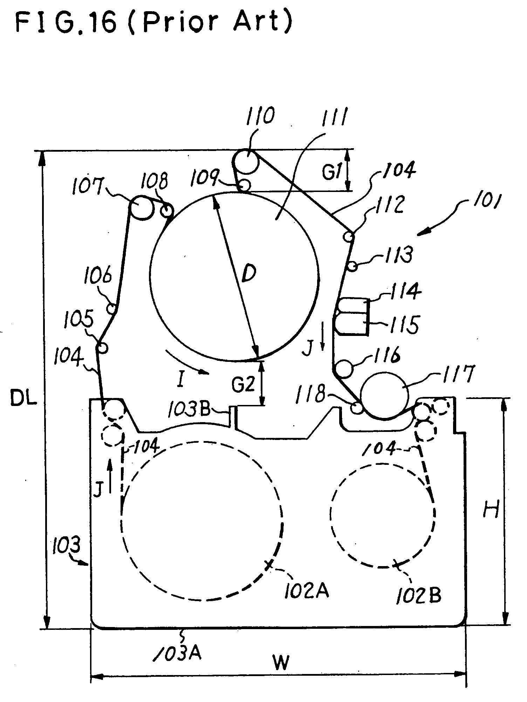

FIG.16 is a plan view of a relevant part of a helical-scanning magnetic recording and reproducing apparatus in the prior art. Referring to FIG.16, a cassette 103 of a magnetic cassette tape comprises a supply reel 102A and a take-up reel 102B, and a magnetic tape 104 is suspended between the supply reel 102A and the take-up reel 102B. The magnetic tape 104 is supplied from the supply reel 102A, is wound around the circumference of a drum 111 by about 270 degrees of central angle via some guide posts and is finally taken up by the take-up reel 102B. A moving path of the magnetic tape 104 is formed by guide posts 105, 106 and 107, tilt guide posts 108 and 109, guide posts 110, 112, 113 and 116 and a pinch roller 117. The magnetic tape 104 is pinched between the pinch roller 117 and a capstan 118 rotating at a predetermined revolution speed, and is moved in the direction shown by an arrow J. An erasing head 114 and a stationary audio head 115 are arranged along the moving path so as to contact the magnetic tape 104. The drum 111 rotates in the direction shown by an arrow I, and a signal is recorded or reproduced on the magnetic tape 104 by a rotating head disposed in the drum 111.

In the magnetic recording reproducing apparatus in the prior art shown in FIG.16, a depthwise length DL from a rear face 103A of the cassette 103 to the guide post 110 is a sum of a depth H of the cassette 103, a diameter D of the drum 111, a gap G1 between a side face of the guide post 110 and the side face of the drum 111 and a gap G2 between a side face of the drum 111 and a front protrusion 103B of the cassette 103.

In the magnetic recording and reproducing apparatus using such a cassette 103, the rear face 103A of the cassette 103 is arranged at the front face of the magnetic recording and reproducing apparatus, and the guide post 110 is placed at the most inner part. Therefore, the depth of the magnetic recording and reproducing apparatus can not be reduced less than the length DL. In general, the reduction of the depth is required in the magnetic and reproducing apparatus, and for this purposes the above-mentioned gaps G1 and G2 must be decreased as shorter as possible. However, since the distances G1 and G2 are relatively shorter than the length H or the diameter D, even if these distances are decreased, the length DL can not be greatly reduced.

In order to reduce the length DL, it is considered to decrease the diameter D of the drum 111. For this purposes, the central angle of the winding portion of the magnetic tape 104 must be increased on the drum 111. In the example shown in FIG.16, the central angle of the winding portion is about 270 degrees and the diameter D of the drum 111 is about 41.33 mm. The maximum central angle of the winding portion may be about 330 degrees, and the diameter D of the drum 111 is about 33.8 mm in this case. Consequently, it is difficult to decrease the diameter D of the drum 111 less than 33.8 mm. Additionally, if the diameter D of the drum 111 is decreased, a circuit for signal-processing is increased, and electric consumption increases. Therefore, it is difficult to miniaturize the apparatus. Consequently, in the conventional magnetic recording and reproducing apparatus using the tape driving mechanism shown in FIG.16, the depth of the magnetic recording and reproducing apparatus is limited by the length DL.

### OBJECT AND SUMMARY OF THE INVENTION

An object of the present invention is to reduce a depth of a magnetic tape driving mechanism of the magnetic recording and reproducing apparatus by substantially perpendicularly rotating a rotating axis of a drum with respect to a rotating axis of a supply reel and a take-up reel of a cassette in operation state. In winding step for winding a magnetic tape of the tape cassette around the drum, the rotating axis of the drum is substantially parallel to the rotating axis of the supply reel and the take-up reel, after completion of the winding of the magnetic tape, the rotating axis of the drum is tilted substantially perpendicularly with respect to the rotating axis of the supply reel and the take-up reel.

The magnetic recording and reproducing apparatus in accordance with the present invention comprises:
magnetic tape cassette holding and driving means for holding a cassette having a supply reel and a take-up reel both having parallel axes for driving a magnetic tape therebetween,
a cylindrical drum having a rotating head for scanning magnetic layer on the magnetic tape which is wound to be driven helically around circumference of the drum, the rotating axis of the drum being tilted substantially perpendicularly with respect to the rotating axis of the supply reel,
a first tilt guide post for changing the moving direction of the magnetic tape supplied from the supply reel to a tangential direction of the drum,
a first guide roller and a second guide roller for helically winding the magnetic tape on the circumference of the drum, and
a second tilt guide post for changing a moving direction of the magnetic tape to a substantially tangential direction of the take-up reel.

While the novel features of the invention are set forth particularly in the appended claims, the invention, both as to organization and content, will be better understood and appreciated, along with other objects and features thereof, from the following detailed description taken in conjunction with the drawings.

### BRIEF DESCRIPTION OF THE DRAWINGS

FIG.1 is a perspective view of an initial state of an embodiment of the magnetic recording and reproducing apparatus in accordance with the present invention;
FIG.2 is a perspective view representing moving path of guide rollers of the embodiment;
FIG.3 is a perspective view in an operation state of the embodiment of the magnetic recording and reproducing apparatus in accordance with the present invention;
FIG.4 is a front view of the embodiment of the magnetic recording and reproducing apparatus in accordance with the present invention;
FIG.5 is a plan view of the embodiment of the magnetic recording and reproducing apparatus in accordance with the present invention;
FIG.6 is a left-side view of the embodiment of the magnetic recording and reproducing apparatus in accordance with the present invention;
FIG.7A is a perspective view showing a position of a drum chassis in the initial state of the embodiment of the magnetic recording and reproducing apparatus in accordance with the present invention;
FIG.7B is a perspective view showing a position of the drum chassis in the operation state of the embodiment;
FIG.8 is a perspective view representing change of postures of tilt guide posts of the embodiment;
FIG.9A is a plan view representing posture of the tilt guide post 8 in the initial state of the embodiment;
FIG.9B is a plan view representing posture of the tilt guide post 8 in the operation state of the embodiment;
FIG.10 is a perspective view of a connection part of the tilt guide post 8;
FIG.11A is a plan view representing posture of the tilt guide post 18 in the initial state of the embodiment;
FIG.11B is a plan view representing posture of the tilt guide post 18 in the operation state of the embodiment;
FIG.11C is a plan view of a stopper of the tilt guide post 18.
FIG.12 is a perspective view of a connection part of the tilt guide post 18;
FIG.13 is a perspective view of a drum in the embodiment of the magnetic recording and reproducing apparatus in accordance with the present invention;
FIG.14 is a perspective view representing arrangement of an audio erasing head in the embodiment of the magnetic recording and reproducing apparatus in accordance with the present invention;
FIG.15A is a perspective view of an example of a video camera in the initial state using a tape moving mechanism of the embodiment;
FIG.15B is a perspective view of the video camera in the operation state;
FIG.16 is the plan view of the relevant part of the magnetic recording and reproducing apparatus in the prior art.

It will be recognized that some or all of the Figures are schematic representations for purposes of illustration and do not necessarily depict the actual relative sizes or locations of the elements shown.

### DESCRIPTION OF THE PREFERRED EMBODIMENT

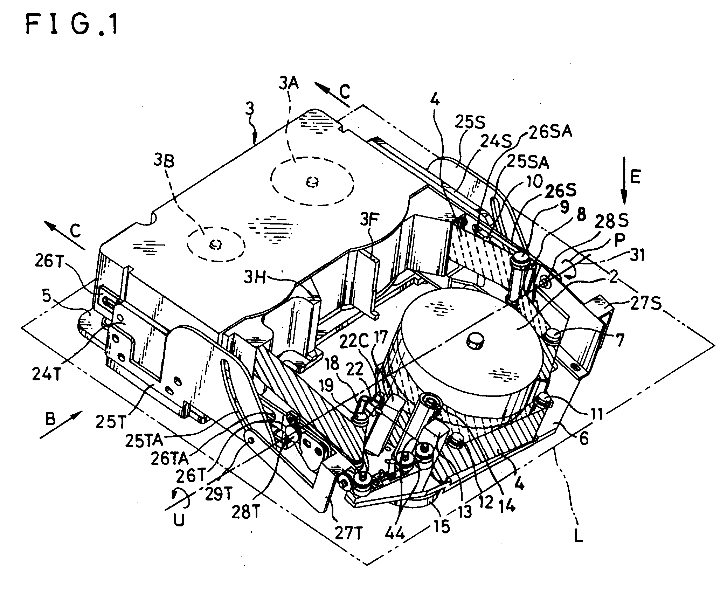

FIG.1 is a perspective view of a magnetic tape moving mechanism of an embodiment of the magnetic recording and reproducing apparatus in accordance with the present invention. The perspective view in FIG.1 shows an "initial state" immediately after a magnetic tape 4 pulled out of a supply reel 3A of a cassette 3 have been wound around a drum 2.

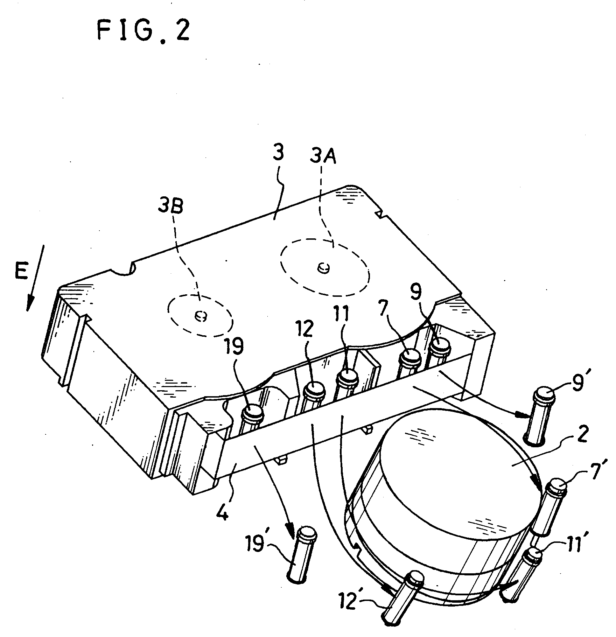

The cassette 3 is the known VHS-C cassette, for example. As shown in FIG.2, when the cassette 3 is inserted in the magnetic recording and reproducing apparatus by shifting in the direction shown by an arrow E as known in the art, five guide rollers 7, 9, 11, 12 and 19 are inserted between the cassette 3 and the tape 4. Subsequently, these guide rollers 7, --- 19 are moved to the respective positions represented by numerals having dashes along the respective moving paths illustrated by allows during pulling out the tape 4 from the cassette 3 by the known shifting mechanism (not shown). Consequently, the magnetic tape 4 is wound around the drum 2.

Referring to FIG.1, a first tilt guide post 8 and a second tilt guide post 18 which are not illustrated in FIG.2 contact the magnetic tape 4. Consequently, a moving path of the magnetic tape 4 is formed from the supply reel 3A to a take-up reel 3B of the cassette 3 via the guide roller 9, tilt guide post 8, guide roller 7, drum 2, guide roller 11, guide roller 12, a capstan 14, tilt guide post 18 and guide roller 19.

In the state of the tape 4 wound on the supply reel 3A and the take-up reel 3B in the cassette 3, a plane passing through centers in the width direction of the tape 4 is defined as a plane L as shown in FIG.1. The plane L is used in the description of the embodiment hereafter. The plane L is usually a substantially horizontal plane.

Referring to FIG.1, the surface of the magnetic tape 4 hatched by solid lines represents a surface coated with magnetic material and the surface hatched by dotted lines represents the back surface of the coated surface.

The cassette 3 is put on a cassette chassis 5, and the guide rollers 9 and 19 are disposed on the cassette chassis 5. The guide rollers 7, 11 and 12 and the tilt guide posts 8 and 18, a capstan 14 and the drum 2 are disposed on a drum chassis 6. The drum chassis 6 is pivotally supported on the cassette chassis 5 and rotates in the direction shown by an arrow P at a rotation axis 31.

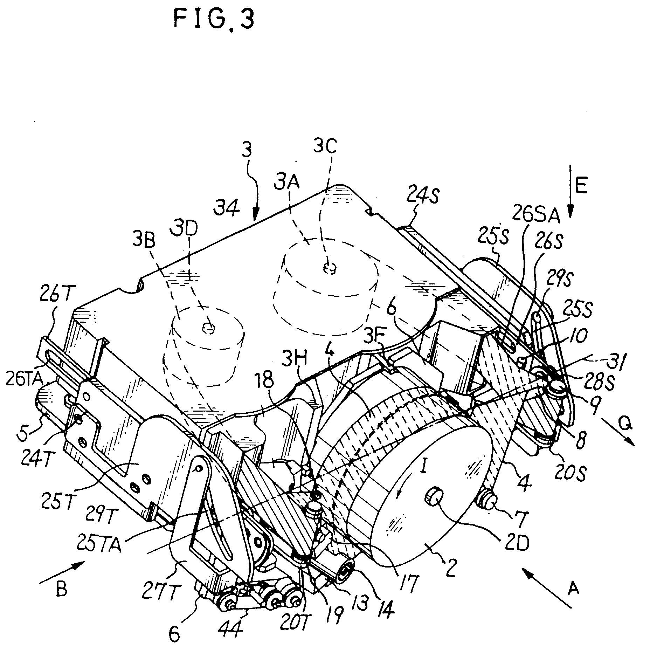

FIG.3 is a perspective view showing the state of the drum chassis 6 rotated by about 80 degrees at the rotation axis 31. The state of a drum chassis 6 is called an "operation state", and in the magnetic recording and reproducing apparatus of the embodiment, recording or reproducing operation is performed in the operation state. In the operation state, the magnetic tape 4 supplied from the supply reel 3A of the cassette 3 is wound around the guide roller 9 via a tension post 10. Subsequently, the moving direction of the tape 4 is changed by the tilt guide post 8 tilted with respect to a shaft 2D of the drum 2 by a predetermined angle and is directed downward to the guide roller 7.

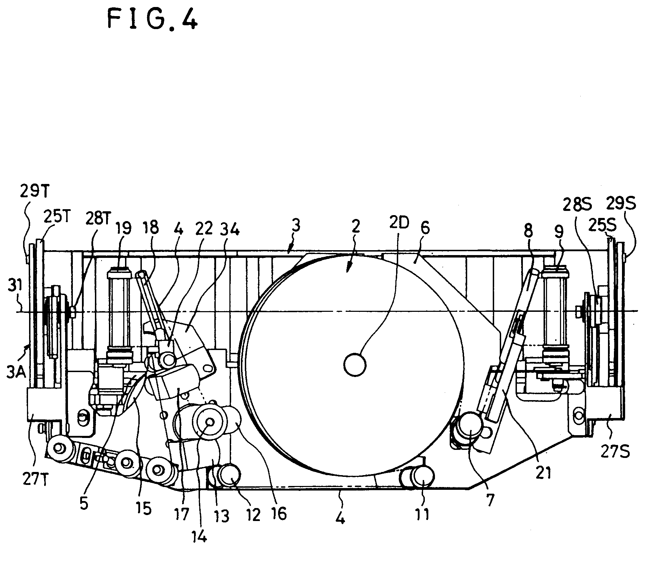

FIG.4 is a front view of the tape moving mechanism observed in the direction shown by an arrow A in FIG.3. Referring to FIG.4, the guide roller 11 is disposed in the proximity to the guide roller 7, and the tape 4 is wound along the drum 2 by these guide rollers 7 and 11. The wound angle is about 300 degrees in the embodiment shown in FIG.4. Furthermore, the magnetic tape 4 passes along the guide roller 12 and a pinch roller 16 and its direction is changed by the tilt guide post 18 as shown in FIG.3. Finally, the tape 4 is taken up by the take-up reel 2B of the cassette 3 via the guide roller 19.

In FIG.4, stationary heads 13 and 17 are disposed between the tilt guide post 18 and the guide roller 12. The stationary head 13 comprises an erasing head for erasing an audio signal and a control head for recording or reproducing a signal for controlling the moving of the tape 4. The stationary head 17 serves as a recording and reproducing head of an audio signal.

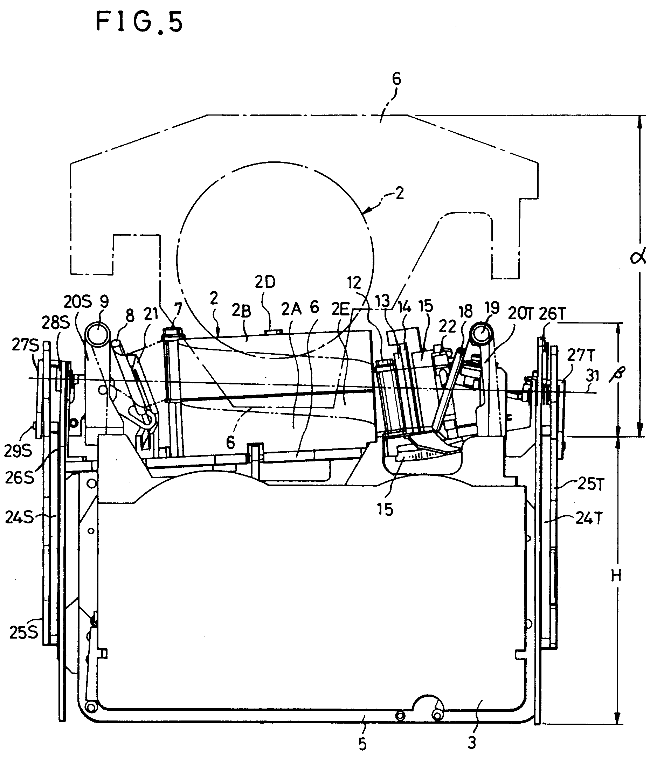

FIG.5 is a plan view of the tape moving mechanism shown in FIG.3. Referring to FIG.5, the drum 2 comprises a stationary drum 2A fixedly mounted on the drum chassis 6 and a rotary drum 2B rotatably bone on the shaft 2D. And a rotary head (not shown) is disposed in a gap between both the drums 2A and 2B. A shallow helical guide groove 2E is formed on the outer surface of the stationary drum 2A and the rotary drum 2B thereby to guide the magnetic tape 4.

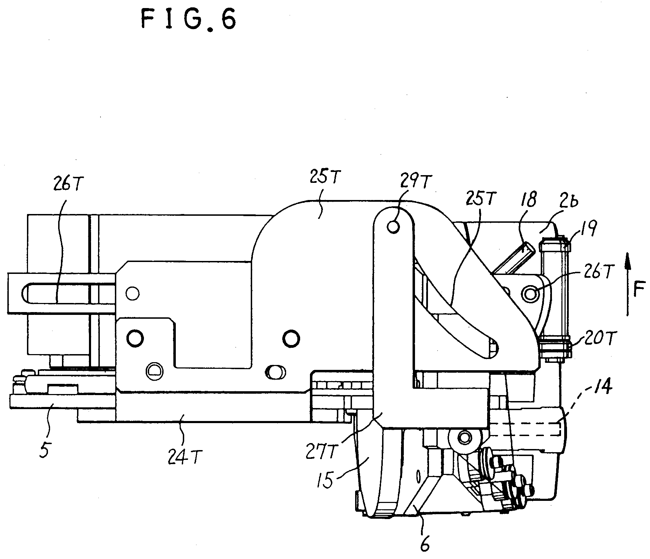

FIG.6 is a left-side view of the tape moving mechanism in the direction shown by an arrow B in FIG.3. Referring to FIG.6, a capstan motor 15 is mounted on the drum chassis 6, and the capstan 14 is rotated by the capstan motor 15. The magnetic tape 4 is pinched by the capstan 14 and the pinch roller 16 as shown in FIG.4 and is moved as known in the art. As shown in FIG.4, since the capstan 14 and the pinch roller 16 are disposed under the cassette chassis 5, the capstan motor 15 may be disposed under the cassette 3. Consequently, the above-mentioned structure contributes to reduce a depth (the length of H+β in FIG.5) of the tape moving mechanism.

Referring to FIG.3, the guide roller 9 is supported by a support member 20S, and the guide roller 19 is supported by a support member 20T. Both support members 20S, 20T are disposed on the cassette chassis 5. Referring to FIG.5, the tilt guide post 8 is supported by a support member 21 and the tilt guide post 18 is supported by a support member 22. These support members 21 and 22 are elucidated in detail hereinafter.

In FIG.1, the tilt guide post 8 is tilted by about 45 degrees with respect to the guide roller 9 in order to change the tape moving direction downward when the drum chassis 6 is rotated to transform from the initial state to the operation state. Consequently, the tape moving direction which is parallel to the plane L at the guide roller 9 is changed to such a direction to traverse the plane L and directed to the guide roller 7 by the tilt guide post 8 as shown in FIG.3.

In a similar manner, in FIG.4, the direction of the tape moving is changed to the direction which is parallel to the plane L by the tilt guide post 18.

A transformation mechanism for transforming from the initial state to the operation state is elucidated hereafter.

Referring to FIG.1, cam plates 25S and 25T are supported by respective plates 24S and 24T which are mounted on the cassette chassis 5 and disposed at both sides of the cassette 3. Both the cam plates 25S and 25T comprise arc-shaped oblong apertures 25SA and 25TA, respectively. An L-shaped arm 27T is fixed on the drum chassis 6 at one end, and the other end thereof comprises a pin 29T inserted in the arc-shaped oblong aperture 25TA. In a similar manner, a hidden L-shaped arm 27S is fixed on the drum chassis 6 at one end, and the other end thereof comprises a pin 25S inserted in the arc-shaped oblong aperture 25SA. The cam plates 25S and 25T serve as members for limiting relative rotation angles between the cassette chassis 5 and the drum chassis 6.

A slider 26S is disposed between the plate 24S and the cassette 3 and is moved in the direction shown by an arrow C by a driving means (not shown). In a similar manner, a slider 26T is disposed between the plate 24T and the cassette 3 and is moved in the direction C by the driving means. The sliders 26S and 26T comprise oblong apertures 26SA and 26TA, respectively, and pins (not shown) mounted on the respective plates 24S and 24T are inserted to the respective oblong apertures 26SA and 26TA. Thereby, the sliders 26S and 26T are linearly movable in the direction C. One end of the slider 26S is connected to the drum chassis 6 by a shaft 28S. In a similar manner, one end of the slider 26T is connected to the drum chassis 6 by shaft 28T. The drum chassis 6 is rotated by the action of the sliders 26S and 26T in the direction C.

In FIG.1, when the sliders 26S and 26T are moved to the direction C by the driving means, the drum chassis 6 which is pivotally connected to the sliders 26S and 26T at the respective shafts 28S and 28T is transferred to the direction C with the L-shaped arms 27S and 27T. The pins 29S and 29T are moved upward along the respective oblong apertures 25SA and 25TA to the accompaniment of the moving of the L-shaped arms 27S and 27T. Consequently, the drum chassis 6 is moved in the direction C and is rotated in the direction shown by the arrow P, namely, clockwise when it is observed in the direction shown by the arrow B. When the pins 29S and 29T have arrived at the upper ends of the respective oblong apertures 25SA and 25TA, the drum chassis 6 is transferred to the operation state shown in FIG.3. In the embodiment, for example, the drum chassis 6 is moved by 15.4 mm in the direction C toward the cassette chassis 5 and is rotated by about 80 degrees.

In the description of the embodiment with reference to FIG.1 and FIG.3, the drum chassis 6 is rotated with respect to the cassette chassis 5, namely, the cassette chassis 5 is fixed on a mounting base (not shown) of the magnetic recording and reproducing apparatus, and the drum chassis 6 is rotated about the rotation axis 31 disposed on the sliders 26S and 26T which are moved along the cassette chassis 5. The rotating operation between the cassette chassis 5 and drum chassis 6 is a relative action. Therefore, in a modified version of embodiment the drum chassis 6 may be fixed on the mounting base of the magnetic recording and reproducing apparatus. In such case, the cassette chassis 5 is rotated with respect to the drum chassis 6 about the rotation axis 31 as shown by an arrow U in FIG.1. In the changing operation from the initial state to the operation state, the cassette chassis 5 holding the cassette 3 is rotated by about 80 degrees in the direction of the arrow U and is moved in the direction opposite to the arrow C, namely toward the drum chassis 6. The resultant operation state becomes what is shown by turning FIG.3 counterclockwise by about 80 degrees.

In the plan view of FIG.5, the drum chassis 6 in the initial state is illustrated with chain lines and that in the operation state is illustrated with solid lines. As seen by comparing the operation state with the initial state in FIG.5, a depth (H+β) (H: depth of cassette) of the tape moving mechanism in the operation state is smaller than a depth (H+α) of the same in the initial state. The depth is reduced by a difference between α and β. The structure of the magnetic recording and reproducing apparatus of the prior art as shown in FIG.16 is similar to the structure in the initial state as illustrated with chain lines in FIG.5. Therefore, in the operation state of the embodiment, the depth of the tape moving mechanism is greatly reduced in comparison with the prior art.

It is important to prevent occurrence of crumple on the tape 4 in the process of rotation of the drum chassis 6. For this purposes, the tilt guide posts 8 and 18 are gradually moved in the respective directions, and are tilted in compliance with the rotation of the drum chassis 6. In the tilting operation, it is required that the rotation centers of the tilt guide posts 8 and 18 are kept to be in the proximity to the plane L.

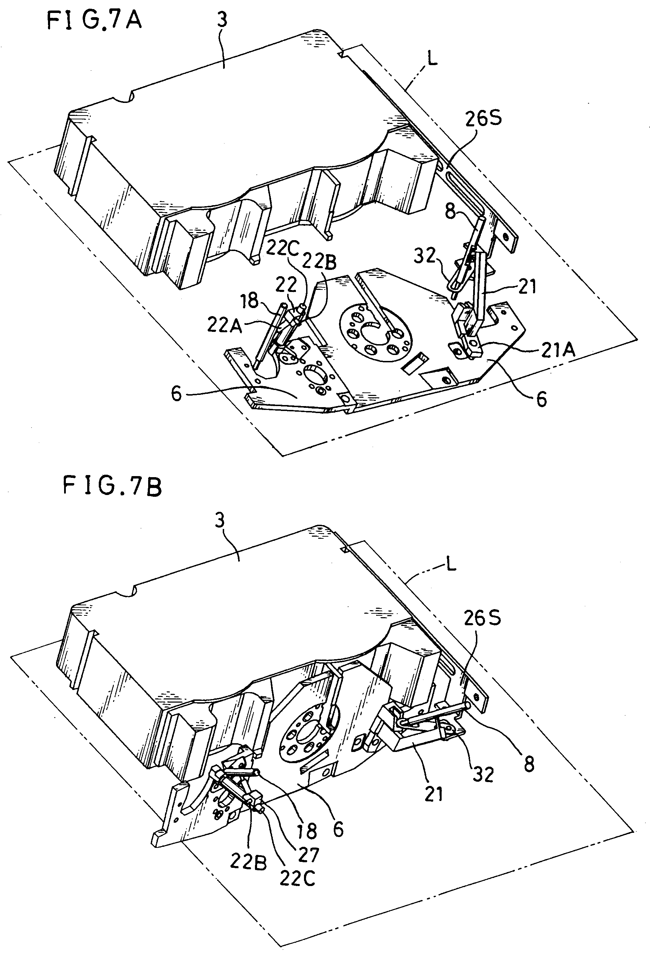

FIGs. 7A and 7B are perspective views illustrating relevant elements illustrating the moving of the drum chassis 6 and the tilt guide posts 8 and 18. FIG.7A is a perspective view representing postures of the tilt guide posts 8 and 18 in the initial state, and FIG.7B is a perspective view representing the postures of the tilt guide posts 8 and 18 in the operation state. In the initial state as shown in FIG.7A, the drum chassis 6 is substantially parallel to the plane L, and the tilt guide posts 8 and 18 are substantially perpendicular to the plane L. In the operation state as shown in FIG.7B, the drum chassis 6 is rotated by about 80 degrees with respect to the plane L, and the tilt guide posts 8 and 18 are tilted by respective predetermined angles with respect to the plane L.

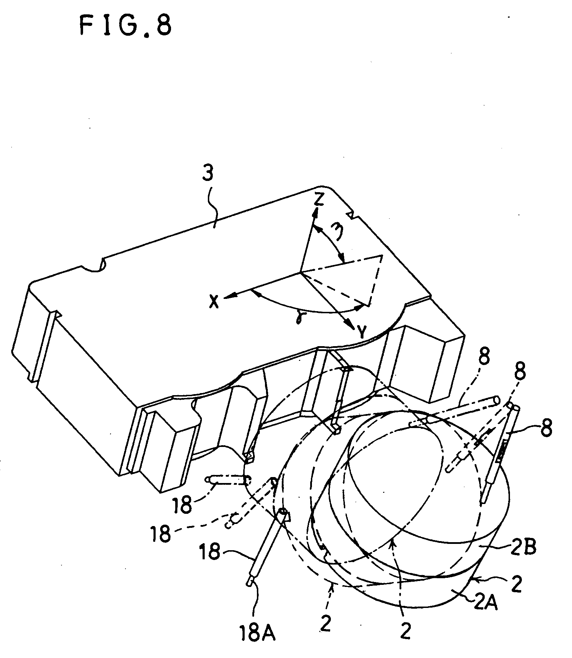

FlG.8 is a perspective view illustrating variation of postures of the tilt guide posts 8 and 18 in the initial state, operation state and an intermediate state between the initial state and operation state. Referring to FIG.8, the tilt guide posts 8 and 18 and the drum 2 in the initial state are illustrated with solid lines, the guide posts 8 and 18 and the drum 2 in the intermediate state are illustrated with dotted lines, and the guide posts 8, 18 and the drum 2 in the operation state are illustrated with chain lines. The tilt guide posts 8 and 18 and the drum 2 are moved in liaison with the rotation of the drum chassis 6 as shown in FIGs. 7A and 7B. The tilt guide posts 8 and 18 are shifted and rotated in the moving operation.

Various mechanisms are applicable in order to achieve the above-mentioned moving operation. However, in any case, it is important that respective rotation centers of the tilt guide posts 8 and 18 are kept in the vicinity of the plane L during transforming from the initial state to the operation state. If the above-mentioned condition is satisfied, the moving direction of the tape 4 is changed substantially perpendicularly without making crumple or twist on the tape 4.

Examples of positions and angles of the tilt guide posts 8 and 18 in the embodiment are shown in Table 1. Referring to Table 1, the origin of coordinates is located on the intersection of the plane L and the axis of the supply reel 3A. Reference points of the tilt guide posts 8 and 18 are defined by respective intersections of the plane L and the respective axes of the tilt guide posts 8 and 18 in the initial state. A reference point of the drum 2 is located on the intersection of the bottom face of the stationary drum 2A and the axis of the drum 2. A tolerance of distance to each value in Table 1 is ±2 mm, and a tolerance of angle is ±5 degrees.

**Table 1**

| X,Y,Z (in mm) η,γ (in deg.) | | Initial state | Intermediate state | Operation state |
|---|---|---|---|---|
| Tilt guide post 8 | X | -17.9 | -17.7 | -18.0 |
| | Y | 60.9 | 53.6 | 43.9 |
| | Z | -0.1 | -0.9 | -1.8 |
| | η | 10.8 | 21.9 | 43.4 |
| | γ | 213.8 | 116.8 | 111.4 |
| Drum 2 | X | 14.6 | 14.2 | 13.9 |
| | Y | 65.5 | 48.1 | 43.9 |
| | Z | -14.9 | -16.1 | -1.8 |
| | η | 11.1 | 47.2 | 90 |
| | γ | 114.3 | 94.8 | 93 |
| Tilt guide post 18 | X | 54.3 | 50.1 | 49.9 |
| | Y | 64.0 | 50.8 | 41.5 |
| | Z | -0.3 | -1.0 | -1.8 |
| | η | 7.3 | 24.6 | 47.7 |
| | γ | 12.4 | 83.2 | 71.9 |

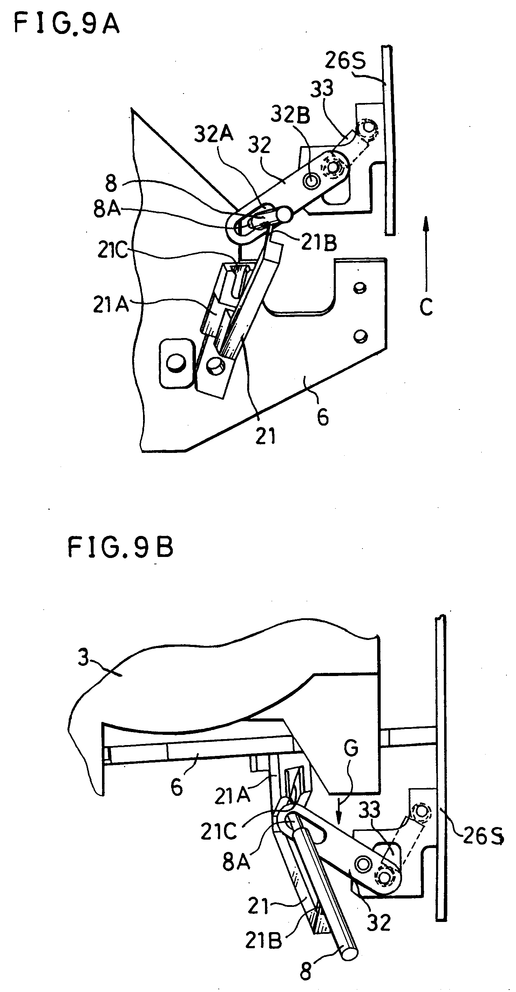

An example of a moving mechanism of the tilt guide post 8 is described with reference to FIGs. 9A and 9B.

FIG.9A is a plan view of relevant elements of the tilt guide post 8 in the initial state observed in the direction shown by an arrow E in FIG.1. Referring to FIG.9A, a slanted support member 21 is mounted on the drum chassis 6 through a base 21A, and an arm 21B is provided on at the end part thereof. The tilt guide post 8 is pivotally supported by the arm 21B at a central part. A lower end part 8A of the tilt guide post 8 is inserted in an oblong opening 32A of a lever 32. The width of the oblong opening 32A is larger than the diameter of the end part 8A, and so there is a clearance between both. The lever 32 is pivotally supported by a shaft 32B fixed on the slider 26S. An end of the lever 32 is connected to the slider 26S through a spring 33.

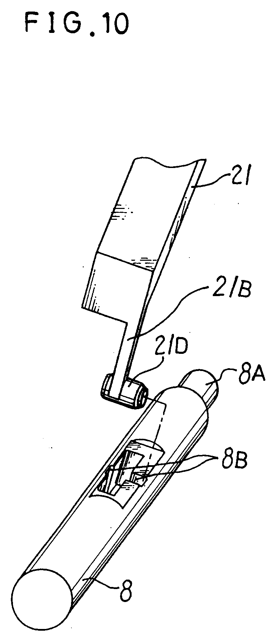

A connection part between the arm 21B and he tilt guide post 8 is shown in FIG.10. The arm 21B comprises a shaft part 21D at the end, and the shaft part 21D is inserted in a shaft reception part 8B formed in the central part of the tilt guide post 8. Therefore, the tilt guide post 8 is held in a cradlable manner within a predetermined angle in a plane including the tilt guide post 8 and the arm 21B.

When the tilt guide post 8 is changed from the initial state to the operation state, as shown in FIG.9A, the slider 26S is moved in the direction shown by the arrow C, and as described above, the drum chassis 6 is rotated. Consequently, the lever 32 is moved in the direction shown by the arrow C.

FIG.9B is a plan view of the relevant elements of the tilt guide post 8 in the operation state observed in the same direction as FIG.9A. In the operation state, the drum chassis 6 is rotated by about 80° degrees with respect to the plane L. The support member 21 is rotated with the drum chassis 6, and the tilt guide post 8 is rotated as shown in FIG.9B. Consequently, the end part 8A of the tilt guide post 8 rotates the lever 32 opposing the tension of the spring 33, and finally is inserted in a slot 21C formed on the base 21A. The tilt guide post 8 receives a force in the direction shown by an arrow G by the lever 32, and maintains the posture shown in FIG.9B by the slot 21C and the arm 21B.

If the tension of the tape 4 is partially varied in the widthwise direction of the tape 4 during passing the tilt guide post 8, the tilt guide post 8 is rotated on a fulcrum of the shaft receiving part 8B and serves to uniform the tension. Consequently, a local variation of the tension on the tape 4 is relaxed and damage to the tape 4 is prevented. The force which is applied to the tilt guide post 8 by the lever 32 is adjustable by changing the tension of the spring 33 so as to give a suitable tension to the tape 4.

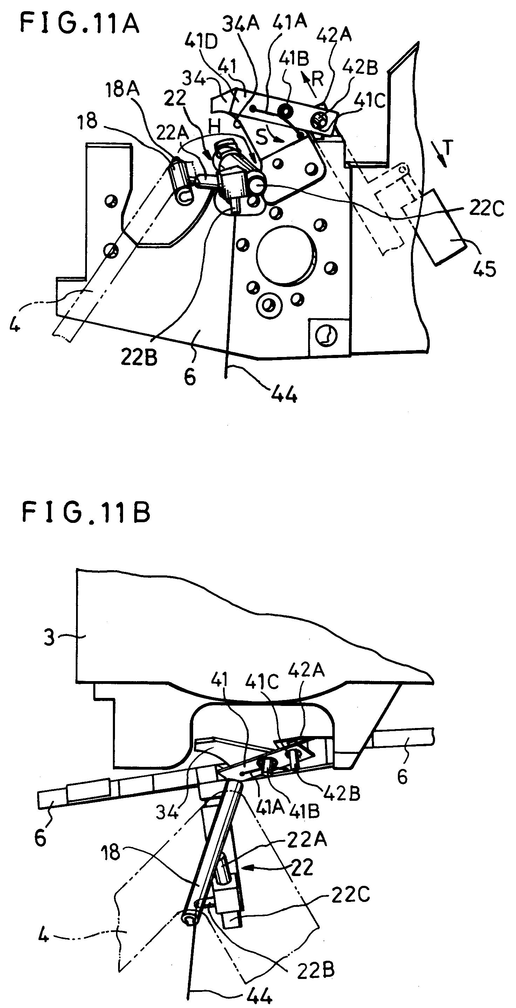

FIG.11A is a plan view of relevant elements of the tilt guide post 18 in the initial state observed in the direction shown by the arrow E in FIG.1, and FIG.11B is a plan view of the relevant elements in the operation state observed in the same direction as FIG.11A. With reference to FIG.7A and FIG.11A, a main post 22C stands uprightly on the drum chassis 6 and a support post 22 is rotatably supported by the main post 22C. The support post 22 comprises an arm 22A extended obliquely downward as shown in FIG.7A, and the tilt guide post 18 is pivotally supported by the end of the arm 22A. The support post 22 comprises a lever 22B at the upper part. As shown in FIG.1, a string 44 is connected to the end of the lever 22B. The string 44 is led to the slider 26T via three rollers 45, and the end of the string 44 is connected to the slider 26T by a fixing screw (not shown). Referring to FIG.11A, the support post 22 is activated by a spring (not shown) so as to rotate clockwise.

As shown in FIG.7B and FIG.11B, when the drum chassis 6 is rotated and transformed from the initial state to the operation state, the string 44 is pulled by the slider 26T, but the string 44 loosens because the drum chassis 6 rotates. Consequently, the support post 22 is rotated clockwise by the tension of the above-mentioned spring, and the posture of the tilt guide post 18 is changed as shown in FIG.11B.

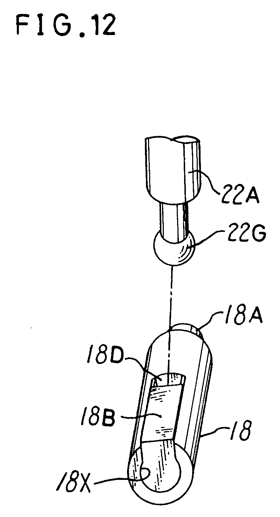

FIG.12 is a perspective view of a connection part of the tilt guide post 18 and the arm 22A. The arm 22A is provided with a ball-shaped end 22G at the lower end. The ball-shaped end 22G is inserted in a ball-shaped end receptor 18D formed on the central part of the tilt guide post 18, and is held by a ball-shaped end holder 18B inserted in a slot 18X formed along the length of the tilt guide post 18. When the ball-shaped end 22G is inserted in the ball-shaped end receptor 18D, the ball-shaped end holder 18B is removed. After insertion of the ball-shaped end 22G in the ball-shaped end receptor 18D, the ball-shaped end holder 18B is inserted in the slot 18X, and the ball-shaped end 22G is supported by the ball-shaped end holder 18B so as to be capable of rotation in the ball-shaped end receptor 18D. The tilt guide post 18 is rotatable in any directions within a small angles by the above-mentioned structure. Consequently, even if the tension of the magnetic tape 4 is partially varied during passing the tilt guide post 18, the tension of the magnetic tape 4 is equalized by rotation of the tilt guide post 18.

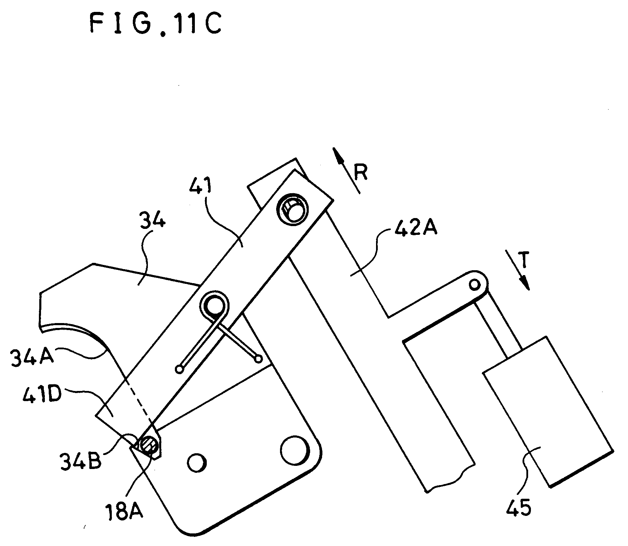

As mentioned above, in FIG.11A, when the support post 22 rotates clockwise and the tilt guide post 18 is shifted, the tilt guide post 18 is rotated within a limited range of angle about the ball-shaped end 22G in compliance with a partial variation of the tension of the tape 4. In the shifting operation of the tilt guide post 18, as shown in FIG.11A, a lower end 18A (illustrated distinctly in FIG.8) travels by sliding on an edge 34A of a guide plate 34 mounted on the drum chassis 6 along a path shown by an arrow H. Finally, the lower end 18A is inserted in a recess 34B formed in the guide plate 34 as shown in FIG.11C.

Subsequently, in FIG.11A, a lever 42A is moved in the direction shown by an arrow R in liaison with the rotation of the drum chassis 6 by operation of a linkage (not shown). The lever 42A comprises a pin 42B inserted in an opening 41C of a lever 41 which is pivotally supported by a pin 41B of the guide plate 34. The guide plate 34 serves as a stopper of the tilt guide post 18. The lever 41 is provided with a spring 41A disposed around the pin 41B and is energized to rotate in the direction shown by an arrow S.

As shown in FIG.11C, when the lever 42A is moved in the direction R in liaison with the rotation of the drum chassis 6, the lever 41 is rotated in the direction S, and an end part 41D of the lever 41 is pressed to the lower end 18A of the tilt guide post 18 inserted in the recess 34B. Consequently, the posture of the tilt guide post 18 is maintained in the operation state as shown in FIG.11B. When the drum chassis 6 is returned from the operation state to the initial state, the lever 42A is pulled in the direction shown by an arrow T by a release device 45 which is comprised of a solenoid or the like and is installed on the drum chassis 6. Consequently, the lever 41 is rotated in a direction opposite to the direction S, and the lower end 18A of the tilt guide post 18 is released.

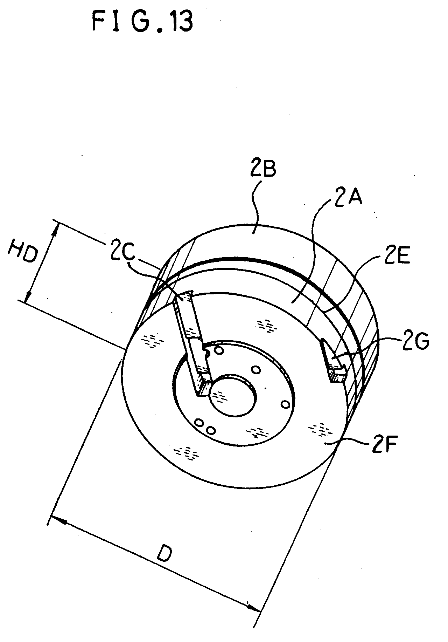

FIG.13 is a perspective view of an example of the drum 2 which is used in the embodiment of the present invention. In the example, slots 2C and 2G are formed on the bottom face 2F of the stationary drum 2A. As shown in FIG.3 in the operation state, protrusions 3F and 3H of the cassette 3 are inserted in the slots 2C and 2G, respectively, and thereby contact between the cassette 3 and the stationary drum 2A is prevented. The shapes and positions of the slots 2C and 2G on the stationary drum 2A are designed in accordance with the protrusions of a cassette 3 which is used in the recording and reproducing apparatus.

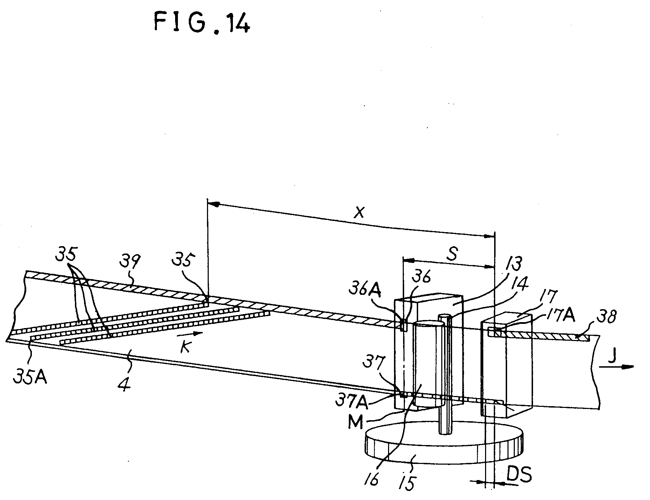

FIG.14 is a perspective view illustrating a relation between the magnetic tape 4 and the audio-erasing head 13 and the audio-recording head 17. According to the standard of the video signal recording and reproducing apparatus, the recording position of an audio signal on the magnetic tape 4 is shifted from the recording position of a video signal by a predetermined distance X. In the embodiment, the audio-erasing head 13 and the audio-recording head 17 are mounted at both sides of the capstans 14, and thereby the distance between the capstans 14 and the audio-recording head 17 is reduced, and the tape moving mechanism is further miniaturized.

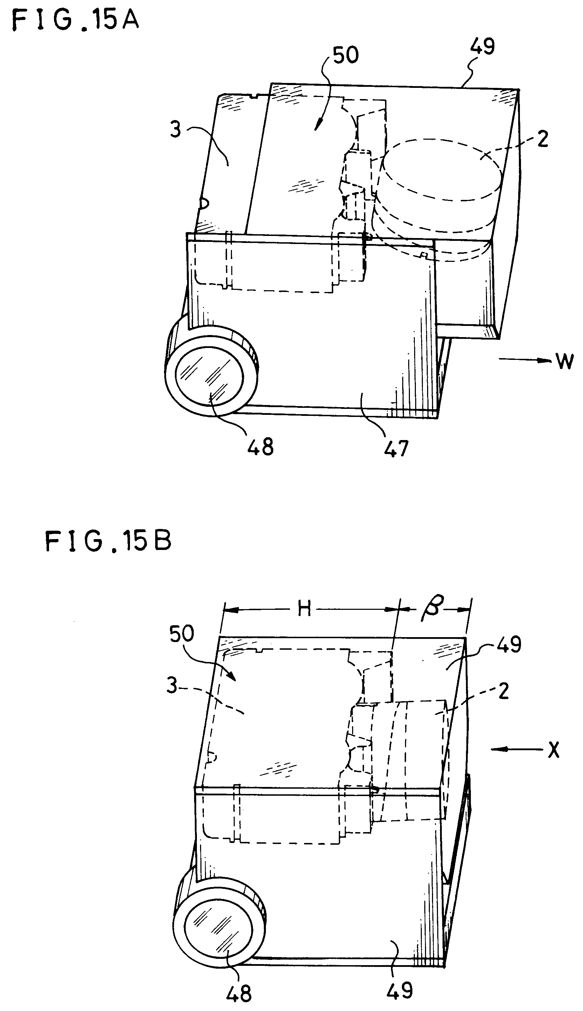

FIGs. 15A and 15B are perspective views of an example of a small-sized video camera to which the tape moving mechanism of the embodiment is applied. Referring to FIGs. 15A and 15B, the tape moving mechanism 50 of the embodiment is mounted on the upper part of a body 47 of the video camera and is covered by a cover 49. The cover 49 is movable in the direction shown by an arrow W, and is protruded from the body in the initial state as shown in FlG.15A. In the operation state, the cover 49 is moved to the direction shown by an arrow X which is opposite to the direction W as shown in FIG.15B. By the above-mentioned configuration, a size (H+β) of the video camera in the right and left direction in FIG.15B is shortened, and thus the video camera is miniaturized.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

## Claims

1. A magnetic recording and reproducing apparatus comprising:
magnetic tape cassette (3) holding and driving means for holding a cassette having a supply reel (3A) and a take-up reel (3B) both having parallel axes for driving a magnetic tape therebetween,
a cylindrical drum (2) having a rotating head for scanning magnetic layer on said magnetic tape (4) which is wound to be driven helically around circumference of said drum, the rotating axis of said drum being tilted substantially perpendicularly with respect to the rotating axis of said supply reel,
a first tilt guide post for changing the moving direction of said magnetic tape supplied from said supply reel to a tangential direction of said drum,
a first guide means and a second guide means for helically winding said magnetic tape on the circumference of said drum, and
a second tilt guide post for changing a moving direction of said magnetic tape to a substantially tangential direction of said take-up reel.

2. A magnetic recording and reproducing apparatus comprising:
a magnetic tape (4) wound on a supply reel (3A),
a cylindrical drum (2) having a rotary head, mounted on a drum chassis (6) positioned at a predetermined angle with respect to the rotating axis (3C) of said supply reel (3A),
a first tilt guide post (8) for changing the moving direction of said magnetic tape (4) supplied from said supply reel (3A) to the tangential direction of said drum (2),
a first and second guide rollers (7,11) for winding said magnetic tape (4) on the circumference of said drum (2), and
a second tilt guide post (18) for changing the moving direction of said magnetic tape (4) wound on said drum (2) to the tangential direction of a take-up reel (3B) rotating at an axis (3D) which is parallel to the axis (3C) of said supply reel (3A).

3. A magnetic recording and reproducing apparatus in accordance with claim 2, wherein
said drum chassis (6) is provided with a rotating means (27S,27T), and when the magnetic tape (4) supplied from said supply reel (3A) is wound on the drum (2), the axis (2D) of said drum (2) is substantially parallel to the axis (3C) of said supply reel (3A), and after said magnetic tape (4) is wound on the drum (2), the axis (2D) of said drum (2) is substantially perpendicularly rotated with respect to the axis (3C) of said supply reel (3A).

4. A magnetic recording and reproducing apparatus in accordance with claim 1 or 2 , when
said first tilt guide post (8) and said second tilt guide post (18) are provided with respective support means (21D,22D) which are rotatable by respective predetermined angles at the respective rotating centers placed in the vicinity of a central line (plain L) in the width direction of said magnetic tape (4) passing on said first tilt guide post (8) and said second tilt guide post (18).

5. A magnetic recording and reproducing apparatus in accordance with claim 2, wherein
said drum chassis (6) comprises a rotating means (27S,27T), and when said magnetic tape (4) supplied from said supply reel (3A) is wound on said drum (2), the rotating axis (2D) of said drum (2) is substantially parallel to the axis (3C) of said supply reel (3A), and after said magnetic tape (6) is wound on said drum (2), the axis of said drum (2) is substantially perpendicularly rotated with respect to the axis (3C) of said supply reel (3A), and
said first tilt guide post (8) and said second tilt guide post (18) are rotated by respective predetermined angles in accordance with the rotation of said drum chassis (6).

6. a magnetic recording and reproducing apparatus in accordance with claim 2, wherein
said drum chassis (6) comprises rotation means (27S,27T), and when said magnetic tape (4) supplied from said supply reel (3A) is wound on said drum (2), the axis (2D) of said drum (2) is substantially parallel to the axis (3C) of said supply reel (3A), and after said magnetic tape (4) is wound on said drum (2), the axis (2D) of said drum (2) is substantially perpendicularly rotated with respect to the axis of said supply reel (3A), and
said first tilt guide post (8) and said second tilt guide post (18) are rotated by respective predetermined angles and are moved to respective predetermined positions in accordance with the rotation of said drum chassis (6).

7. a magnetic recording and reproducing apparatus in accordance with claim 6, wherein
said first tilt guide post (8) and said second tilt guide post (18) are supported by respective support means (21,22) which are variable at least one of each slant angle, each slant direction and each position of said first tilt guide post (8) and said second tilt guide post (18) with respect to the rotating axis (3C) of said supply reel (3A).

8. a magnetic recording and reproducing apparatus in accordance with claim 6, wherein
support means (21,22) of said first tilt guide post (8) and said second tilt guide post (18) comprise:
means for varying at least one of each slant angle, each slant direction and each position of said first tilt guide post (8) and said second tilt guide post (18) with respect to the rotating axis (3C) of said supply reel (3A),
restriction means (21C,41) for restricting variation of at least one of said each slant angle, said each slant direction and said each position, and
release means (32,45) for releasing the restriction by said restriction means.
